# EUROPEAN PATENT SPECIFICATION

(11) **EP 3 691 187 B1**
(45) Date of publication and mention of the grant of the patent: **29.09.2021**
(21) Application number: 19154833.8
(22) Date of filing: 31.01.2019
(51) Int. Cl.: H04L 12/24

(54) **A DEVICE AND METHOD FOR CONNECTING TELECOMMUNICATION EQUIPMENT INSIDE CUSTOMER PREMISES TO A TELECOMMUNICATIONS NETWORK**
VORRICHTUNG UND VERFAHREN ZUR VERBINDUNG EINER TELEKOMMUNIKATIONSAUSRÜSTUNG AM KUNDENSTANDORT MIT EINEM TELEKOMMUNIKATIONSNETZWERK
DISPOSITIF ET PROCÉDÉ DE CONNEXION D'ÉQUIPEMENT DE TÉLÉCOMMUNICATION DANS LES LOCAUX D'UN CLIENT À UN RÉSEAU DE TÉLÉCOMMUNICATIONS

(43) Date of publication of application: 05.08.2020
(73) Proprietor: Nokia Solutions and Networks Oy, 02610 Espoo (FI)
(72) Inventor: Timmers, Michael, 2018 Antwerpen (BE)
(74) Representative: IP HILLS NV

(56) References cited:
- US-A1- 2005 282 536
- US-A1- 2012 011 274
- US-A1- 2012 040 663
- US-B2- 7 239 698

## Description

### Technical Field

Various example embodiments relate, amongst others, to a device and method for connecting telecommunication equipment inside customer premises to a telecommunications network.

### Background

Classical solutions for connecting telecommunication equipment inside customer premises to a telecommunications network, include wired technologies like e.g. copper cable (xDSL) or coaxial cable. Mostly making use of existing infrastructure, those solutions require small investments. They allow for standard transmission speeds of order 10 - 100 Mb/s.

Standard transmission speeds of this order of magnitude can also be obtained with a Fixed Wireless Access solution, e.g. based on connectivity with an LTE/4G network. Several form factors exist, both outdoor as well as indoor. An outdoor antenna can be used to get access to the LTE/4G network, together with a wired connection throughout the wall. Using an outdoor antenna gives optimal performance as the wireless signal is not attenuated by the wall, but requires a hole to be drilled through the wall. Given the relatively low frequency (sub-6 GHz), an alternative is to use an indoor antenna to get access to the LTE/4G network, where no communication wire throughout the wall is needed. This results in a convenient solution providing basic connectivity service. The LTE/4G technology provides large areas of coverage. This technology is mainly used in rural areas where setting up the infrastructure for wired communication services is prohibitively expensive.

An example of a Fixed Wireless Access solution is given in US2005/0282536A1, describing a demarcation device coupled with an antenna for converting inbound voice communications from a wireless protocol to a wired format and vice versa. US007239698B2 describes a similar solution, where a demarcation device is used to isolate the topologies of the external and internal transport media.

Another, high-end solution for connecting customer premises to a telecommunications network makes use of optical fibre technology. A Passive Optical Network (PON) uses cables of glass fibre and passive optical components such that the optical transmission of data requires no power. This technology allows for very high transmission rates (in the order of 1 to 3 Gbps with upgrades foreseen up to 100 Gbps) within a very wide efficiency range, but requires high investments in passive infrastructure. Bringing fibre all the way to the home (FTTH) is not feasible or cost-effective in a lot of streets, neighbourhoods and areas.

In order to fill gaps in the optical fibre network coverage, the last mile between the network and the premises can be bridged using another technology. Next to copper-based last-mile technologies, the last mile can be bridged wirelessly. A wireless last-mile solution uses an outdoor antenna to receive signals from a base station at a fibre endpoint, and specific wireless technology that allows for transmission speeds in the order of Gb/s. Typically the communication signal is transmitted to the inside of the premises using a communication wire through a hole in the outside wall. The option to bridge the last mile wirelessly allows operators to effectively deliver fibre-like speeds to customers that cannot be directly connected to the optical fibre network. In this way, the potential of new subscribers to high-end fibre-based services is significantly increased.

### Summary

In the domain of Fixed Wireless Access, where no cabling is used to give premises access to a telecommunications network, today both low-end solutions, e.g. 4G/LTE-based Fixed Wireless Access, and high-end solutions, e.g. wireless last-mile technology to connect to an optical fibre network, exist. However, today the upgrade from a low-end subscription to a high-end subscription is cumbersome for the customer. Indeed, upgrading requires the installation of entirely new hardware. Moreover, the installation of this new hardware involves undesirable disruption in the busy lives of customers, as a hole needs to be drilled through a physical perimeter and the presence of the customer at installation is required to give technicians access to interior rooms.

At present, there is no Fixed Wireless Access solution that allows for a flexible and seamless upgrade from a low-end subscription (transmission speed order 10 - 100 Mb/s) to a high-end subscription (transmission speed order Gb/s).

Amongst others, it is therefore an object to disclose embodiments of a transceiver device for connecting telecommunication equipment inside customer premises to a telecommunications network providing Fixed Wireless Access Services, that allows for a flexible upgrade from a low-end to a high-end solution with maximal user convenience.

This object is achieved, according to a first example aspect of the present disclosure, by a transceiver device for providing wireless access to customer premises as defined by claim 1, where these premises are bordered by a perimeter, the transceiver device being configured to be mounted on the inner edge of that perimeter, and the transceiver device comprising:
- a low-end module configured to receive and transmit a standard-speed communication signal via a wireless connection with a base station of a first telecommunication network outside the perimeter, the standard-speed communication signal being supported by a first level subscription;
- a high-end interface configured to receive and transmit a high-speed communication signal via a wireless connection established throughout the perimeter, the high-end interface being configured to establish the wireless connection with an outside transceiver device, when the outside transceiver device is mounted on the outer edge of the perimeter and the outside transceiver device wirelessly connects with a base station of a second telecommunication network,
wherein the high-speed communication signal is supported by a second level subscription, the high-speed communication signal having a transmission speed higher than the transmission speed of the standard-speed communication signal;
- an activation module configured to receive an activation command and to activate the high-end interface upon receipt of the activation command.

Thus, example embodiments of the disclosure concern a transceiver device that is configured to be mounted on the inner edge of a perimeter. A perimeter forms a physical demarcation of premises (e.g. a house or business building), without apertures, e.g. a wall separating the inside from the outside of the premises, a window, a roof, ... At installation, the transceiver device is mounted on the inner edge of the perimeter, i.e. in the inside of the premises but not e.g. somewhere centrally in an internal room. The telecommunications networks considered provide Fixed Wireless Access, meaning that no communication cabling arrives at the outer edge of the perimeter and base stations are available within the network that allow for wireless transmissions.

In example embodiments, the transceiver device comprises a low-end module. Typically, at first use of the transceiver device, the low-end module is active. This means that the transceiver device, being installed on the inner edge of the perimeter, receives and/or transmits a standard-speed communication signal via a connection established throughout the perimeter. The latter connection may be wireless or wired. Firstly, an example of a wireless connection, is the wireless exchange of LTE/4G signals throughout the wall. In this example, the low-end module e.g. comprises an antenna and modem to connect directly to the LTE/4G network. In this case, the transceiver device is the only hardware device needed to connect to the low-end service; no additional outside hardware is needed. In this example, the wireless transmission throughout the perimeter is possible because of the use of a low-spectrum technology. In the example of the LTE/4G signals, a relatively low frequency is used, namely sub-6 GHz, allowing for such a wireless transmission through the perimeter. Secondly, an example of a wired connection is the use of an Ethernet cable through the perimeter to connect the transceiver device with an outdoor antenna/modem installed at the outer edge of the perimeter, where the outdoor antenna wirelessly exchanges signals with an LTE/4G base station. In this case, the low-end module comprises the means to interface with the wired connection through the wall. For example, a standard-speed communication signal has a transmission speed in the order of 10 - 100 Mb/s. When using the transceiver device with activated low-end module, the customer pays a fee related to a low-end subscription, thereby being offered upload/download rates in correspondence with the transmission speed of the standard-speed communication signal.

In example embodiments, the transceiver device comprises a high-end interface. When using the transceiver device with active high-end interface, the transceiver device, which is installed on the inner edge of the perimeter, receives and/or transmits a high-speed communication signal via a wireless connection established throughout the perimeter. For example, the high-speed communication signal has a transmission speed that is about 10 times higher than the transmission speed of the standard-speed communication signal. For example, the transmission speed of the high-speed communication signal is in the order of Gb/s. The wireless connection throughout the perimeter uses any wireless protocol, like e.g. any (future) Wi-Fi standard. In another example, the wireless connection throughout the perimeter uses inductively power coupling, e.g. providing a data communication link of up to 2,5 Gb/s through the perimeter. The high-speed communication signal, received wirelessly throughout the perimeter, originates e.g. from a high-speed external connection. Such a high-speed external connection is, for example, a high-speed wireless connection with an optical fibre network. Additional hardware needs to be installed at the outer edge of the perimeter to transceive and (de)modulate the external high-speed wireless signals. After a wireless transmission through the perimeter, the high-speed communication signal is received by the transceiver device, by means of the (activated) high-end interface.

The standard-speed communication signal is supported by a first level subscription, and the high-speed communication signal is supported by a second level subscription. A first level subscription is for example a basic, standard or low-end subscription, for which a certain fee is due. A second level subscription is for example an advanced, premium or high-end subscription, for which a higher fee is due. Depending on the subscription the customer registers and pays for, the standard-speed respectively the high-speed communication signal is delivered. With growing demand for high bandwidth applications like video streaming, the need for customers to flexibly switch from low-end to high-end subscriptions is on the rise.

When the customer has a low-end subscription, and upgrades to a high-end subscription, the high-end interface must be activated. Simultaneously, the low-end module is de-activated. Activation of the high-end interface, and de-activation of the low-end module, occurs upon receipt of an activation command by an activation module. The integration of a low-end module as well as a high-end interface in the transceiver device has the advantage that for upgrading to a high-end subscription, the internally installed transceiver device remains unaltered. Thus, no new hardware needs to be installed inside the premises, thereby reducing disruption for the customer. Moreover, as the connection throughout the perimeter is done wirelessly in the high-end configuration, no hole needs to be drilled and no communication wire needs to be installed. This contributes to a less-intrusive installation process, easing the mind of a (potential) customer.

In sample embodiments of the transceiver device, as defined by claim 2, the activation module is configured to receive the activation command from outside the perimeter. This means that a remote activation of the high-end interface is possible. In this way, when an upgrade is desired, the user simply has to pass his request, e.g. by clicking a box on the operator's website. When coming on-site to install the high-end solution, a technician e.g. uses a unit or remote control to activate the high-end interface remotely, without entering the premises. As a result, the customer does not have to be at home when the technician comes to install the high-end solution, which has the advantage of less disruption of the customer's live.

In sample embodiments of the transceiver device, as defined by claim 3, the high-end interface is configured to establish the wireless connection throughout the perimeter with an outside transceiver device. This means that, when using the transceiver device, the latter is installed at the inner edge of the perimeter, while the outside transceiver device is mounted on the outer edge of the perimeter, and a wireless communication occurs between the inside transceiver device and the outside transceiver device, avoiding that the physical perimeter must be perforated and avoiding that a technician requires access to the customer premises. Typically, the outside transceiver device is installed by a qualified person, e.g. a technician dispatched by a telecom operator, after the customer has passed his request to upgrade to a high-end subscription. Moreover, the outside transceiver device wirelessly connects with the endpoint of a high-speed wired network. The high-speed wired network is for example an optical fibre network. The outside transceiver device wirelessly connects with a base station at an optical fibre network endpoint, i.e. the last mile between customer premises and network is bridged wirelessly. Typically, specific technology, e.g. high-spectrum technology, is used for this wireless last-mile-bridge, enabling high transmission speeds in the same order of magnitude as delivered by the optical fibre network. For example, mmWave technology may be used for this, operating in the relatively unused 60 GHz spectrum. This enables to use wider channels than when operating in the crowded sub-6 GHz frequency bands, resulting in significantly faster transmission speeds in the order of Gb/s. As such high-spectrum signals behave quasi-optically, line-of-sight conditions between transmitter and receiver are important to ensure optimal connectivity. Therefore, the outside transceiver device needs to be installed at the outer edge of the perimeter and line-of-sight conditions need to be taken into account when determining its position on the outer perimeter. The use of wireless last-mile-technology to connect to a high-speed (wired) network, has the advantage that premises not covered by e.g. an optical fibre network, can be served with a high-speed signal. Consequently, owners of those premises are potential users of the transceiver device.

In sample embodiments of the transceiver device, as defined by claim 4, the transceiver device is configured to wirelessly transmit a pilot signal throughout said perimeter. This means that, apart from the actual communication signal, also another signal can be transmitted by the transceiver device. The latter signal is e.g. activated at receipt of an activation command by the activation module. The pilot signal preferably uses the same technology as is used by the high-speed communication signal. The ability to transmit a pilot signal has the advantage that it allows for a localisation of the transceiver device without entering the premises. Estimating the position of the internally installed transceiver device may help the technician in determining the optimal location of the outside transceiver where a short-range high-throughput wireless connection must be established with. Such an optimal position for the outside transceiver device may be based on a balance between line-of-sight conditions towards an external high-speed wired network and connectivity with the internally installed transceiver device. By means of the pilot signal, the location of the transceiver device at the inner edge of the perimeter can be estimated without entering the premises. This contributes to less disruption for the customer.

In sample embodiments of the transceiver device, as defined by claim 5, the low-end module is configured to connect to a wireless communication network, where the connection throughout the perimeter is established wirelessly and this wireless connection uses a low-spectrum technology. A wireless communication network is, for example, an LTE/4G network. As the LTE/4G signals operate in the sub-6 GHz spectrum, a wireless transmission through the perimeter is possible. This allows for a direct wireless connection between the transceiver device and an LTE/4G base station, without outdoor antenna. This has the advantage that the transceiver device, when used in the low-end configuration, can be installed inside the premises by the end-user himself. In this low-end configuration, no additional external hardware affecting the aesthetics of the outer wall is needed, and no hole needs to be drilled in the perimeter.

In sample embodiments of the transceiver device, as defined by claim 6, the high-speed wired network is an optical fibre network. Optical fibre technology allows for high transmission rates in the range of Gb/s, thereby being able to transceive a high-speed communication signal.

In sample embodiments of the transceiver device, as defined by claim 7, the high-end interface is configured to establish the wireless connection with an outside transceiver device, where the outside transceiver is configured to wirelessly connect with the high-speed wired network via a high-spectrum technology. An example of high-spectrum technology is mmWave technology. mmWave technology operates in the relatively unused 60 GHz spectrum, resulting in significantly higher transmission speeds of order Gb/s than when a low-spectrum technology operating in the sub-6 GHz bands is used. The use of high-spectrum technology has the advantage that it enables a high-speed wireless exchange of the communication signal between the outside transceiver device and the endpoint of a high-speed wired network.

In sample embodiments of the transceiver device, as defined by claim 8, the high-end interface is configured to establish the wireless connection throughout the perimeter using at least one of inductive power coupling, RF technology, and low-spectrum technology. E.g., a wireless interface by inductive power coupling allows for high data rates, e.g. order Gb/s, and low power dissipation.

In sample embodiments of the transceiver device, as defined by claim 9, the high-end interface is configured to establish the wireless connection throughout the perimeter using a low-spectrum technology for exchanging the data part of the high-speed communication signal. Thus, different technologies may be used for passing the data part of the high-speed communication signal and the power transmission. For example, the power transmission may be based on inductive power coupling, while a sub-6 GHz technology like LTE/4G may be used for the data part of the high-speed communication signal. The low-spectrum technology used for the data part of the high-speed communication signal may be the same technology as is used by the low-end module. In other words, the low-end module may be reconfigured towards a high-end interface. This has the advantage that no additional transceiver for the low-end module is needed, thereby simplifying the transceiver device and reducing its cost.

In sample embodiments of the transceiver device, as defined by claim 10, the high-speed communication signal has a transmission speed which is at least 10 times higher than the transmission speed of the standard-speed communication signal. For example, the high-speed communication signal has a transmission speed of order Gb/s, and the standard-speed communication signal has a transmission speed of order 100 Mb/s. As communication technology evolves, it is expected that both the transmission speed in the low-end and the high-end configuration will increase over time. The distinction between transmission speeds of a high-speed and a standard-speed communication signal remains relevant though, defined by a relative ratio of at least a factor 10.

In sample embodiments of the transceiver device, as defined by claim 11, the transceiver device further comprises a distribution module configured to transceive communication signals between the telecommunication equipment and the transceiver device. The distribution module is intended to connect the telecommunication equipment inside the customer premises to the transceiver device, such that during use they communicate via either a standard-speed or high-speed communication signal. The connection between the telecommunication equipment and the transceiver device can be wired and/or wireless. For example, the distribution module is a router, connectivity with an external router, a switch like for instance an Ethernet switch, connectivity with a switch, a wireless access point, connectivity with a wireless access point, etc.

According to a second example aspect, as defined by claim 12, a method is disclosed for providing Fixed Wireless Access services to customer premises, where the premises are bordered by a perimeter, and where the method comprises the following steps:
- mounting a transceiver device on the inner edge of the perimeter;
- transceiving a standard-speed communication signal throughout the perimeter by a low-end module in the transceiver device via a wireless connection with a base station of a first telecommunication network outside the perimeter, the standard-speed communication signal being supported by a first level subscription;
- mounting an outside transceiver device on the outer edge of the perimeter;
- receiving an activation command from outside the perimeter by an activation module in the transceiver device;
- activating a high-end interface in the transceiver device upon receipt of the activation command;
- transceiving by the high-end interface, a high-speed communication signal between the transceiver device and the outside transceiver device, using a wireless connection established throughout the perimeter, the wireless connection being established with the outside transceiver device and the outside transceiver device wirelessly connecting with a base station of a second telecommunication network, wherein the high-speed communication signal is supported by a second level subscription, the high-speed communication signal having a transmission speed higher than the transmission speed of the standard-speed communication signal.

Thus, example embodiments of the disclosure concern a method for installing and using the transceiver device, and switching it from a low-end configuration to a high-end configuration. The transceiver device may be installed by the-end user, whereby the end-user installs the transceiver device at the inner edge of the perimeter. Optionally, the position of the transceiver device is not chosen arbitrary, but already takes into account good connectivity with an outside transceiver device in a future high-end configuration. The (future) position at the outer wall of such an outside transceiver device may be driven by line-of-sight conditions towards an external network. Typically, at first use the transceiver device is used in the low-end configuration, thereby transceiving a standard-speed communication signal. When the end-user wants to upgrade from a low-end subscription to a high-end subscription, he passes his request to the telecom operator, after which a service technician comes on-site to activate the high-end solution. Activation of the high-end interface is done by sending an activation command to the activation module. Remote activation may be realised by a remote control carried by the technician or via the low-end connection by the operator. This has the advantage that the end-user does not need to be at home when the technician visits the premises. Upon receipt of this command, the high-end interface is activated, while the low-end module is de-activated. With activated high-end interface, the high-end interface starts transceiving a high-speed communication signal using a wireless connection established throughout the perimeter.

In sample embodiments of the method, as defined by claim 13, the method further comprises:
- transmitting a pilot signal by the transceiver device;
- determining an optimal position by a technician based on both the signal strength of the pilot signal measured at the outer edge of the perimeter and the connectivity with an outside high-speed wired network;
- mounting the outside transceiver device on the outer edge of the perimeter at the optimal position.

Thus, sample embodiments of the method further comprise the step of transmitting a pilot signal. Such a pilot signal may be transmitted by the transceiver device upon receipt of an activation command. E.g., when a technician comes on-site to install the high-end solution, he may first scan with a receiver the power strength of the pilot signal transmitted by the transceiver device throughout the perimeter. Next, the technician may determine an optimal position for an outside transceiver device that is to be installed at the outer edge of the perimeter. The optimal position may be based on both the measured signal strength of the pilot signal, and the connectivity with a high-speed wired network. For the latter, line-of-sight conditions towards the high-speed wired network may be important. Mounting the outside transceiver device at an optimal position has the advantage that in the high-end configuration of the transceiver device, an optimal quality can be guaranteed for the delivered high-end services.

According to a third example aspect, as defined by claim 14, a computer program product is disclosed, comprising computer-executable instructions for causing a device to perform at least the following:
- transceiving a standard-speed communication signal throughout a perimeter by a low-end module in a transceiver device mounted on the inner edge of the perimeter, via a wireless connection with a base station of a first telecommunication network outside the perimeter, the standard-speed communication signal being supported by a first level subscription;
- receiving an activation command by an activation module in the transceiver device;
- activating a high-end interface in the transceiver device upon receipt of the activation command;
- transceiving by the high-end interface, a high-speed communication signal between the transceiver device and an outside transceiver device mounted on the outer edge of the perimeter, using a wireless connection established throughout the perimeter, the wireless connection being established with the outside transceiver device and the outside transceiver device wirelessly connecting with a base station of a second telecommunication network, wherein the high-speed communication signal is supported by a second level subscription, the high-speed communication signal having a transmission speed higher than the transmission speed of the standard-speed communication signal.

### Brief Description of the Drawings

Some example embodiments will now be described with reference to the accompanying drawings.
Fig. 1 gives a functional block scheme of an example embodiment of a transceiver device, while being used with activated low-end module;
Fig. 2 gives a functional block scheme of an example embodiment of a transceiver device upon receipt of an activation command;
Fig. 3 gives a functional block scheme of an example embodiment of a transceiver device, while being used with activated high-end interface;
Fig. 4 shows an example of the use within customer premises of an example embodiment of a transceiver device, where a low-end subscription applies;
Fig. 5 shows an example of the use within customer premises of an example embodiment of a transceiver device, where a high-end subscription applies; and
Fig. 6 illustrates an example embodiment of a method for connecting telecommunication equipment inside customer premises to a telecommunications network, in particular to use an example embodiment of a transceiver device in a low-end configuration and to switch to a high-end configuration.

### Detailed Description of Embodiment(s)

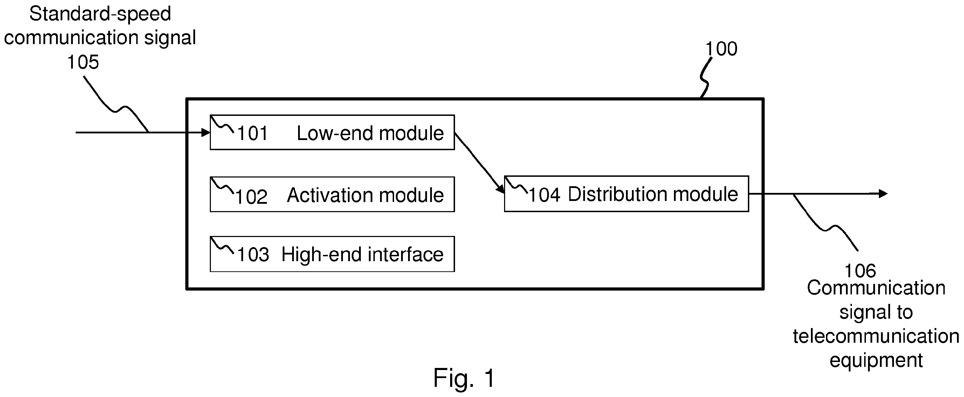

Fig. 1 gives a functional block scheme of an example embodiment of a transceiver device 100. The transceiver device 100 comprises a low-end module 101, an activation module 102, and a high-end interface 103. Optionally, the transceiver device 100 further comprises a distribution module 104. In the example of Fig. 1 the low-end module 101 is activated, whereby a standard-speed communication signal 105 is received by the low-end module 101. The low-end module 101 comprises an interface to permit a standard-speed communication signal 105 to be transmitted and received at the perimeter side. In an example embodiment, the low-end module 101 comprises means for wireless transmission and receipt of a standard-speed communication signal 105, e.g. an antenna and modem to transceive and (de)modulate LTE/4G signals. In another example embodiment, the low-end module 100 may comprise a port or socket to connect e.g. a twisted pair Ethernet cable. The standard-speed communication signal 105 is supported by a first level subscription. A first level subscription is for example a basic, standard or low-end subscription, for which a corresponding fee is due. For example, the standard-speed communication signal 105 has a transmission speed in the order of 10 - 100 Mb/s. Other levels of transmission speed are possible however, e.g. in correspondence with future developments in telecommunications technology.

In the example embodiment shown in Fig. 1 the received standard-speed communication signal 105 is transmitted to a distribution module 104. The distribution module 104 comprises an interface and/or gateway to permit the received signal to be distributed to and from telecommunication equipment 403, as a communication signal 106. The communication signal 106 may be transmitted via a wired connection or a wireless connection, or both a wired and wireless connection may be used. For example, the distribution module is a router, connectivity with an external router, a switch like for instance an Ethernet switch, connectivity with a switch, a wireless access point, connectivity with a wireless access point, etc. Analogously, not shown in Fig. 1, signals transmitted by telecommunication equipment 403 may be received by the transceiver device 100.

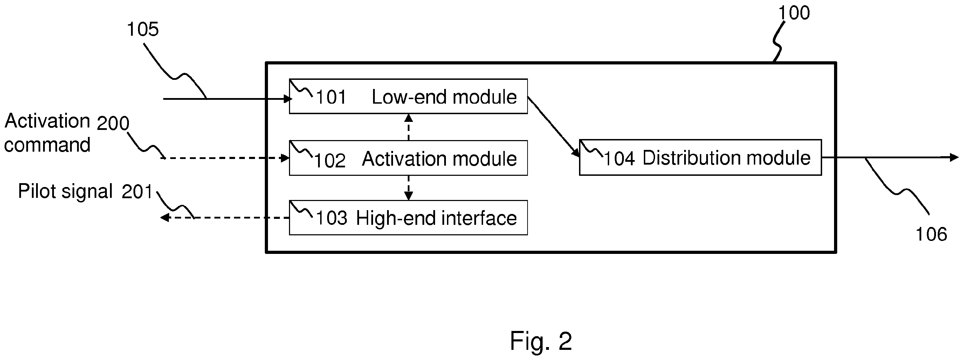

To switch from a low-end configuration of the transceiver device 100, with active low-end module 101, to a high-end configuration, with active high-end interface 103, an activation command 200 is sent to the activation module 102, as is illustrated in Fig. 2. Optionally, the activation command 200 may be sent remotely, e.g. by a service technician using a remote control or via the low-end connection by the operator. For example, the activation module 102 may comprise a receiver and a processing unit or control unit to process the received activation command 200. Moreover, the activation module 102 comprises an interface with the low-end module 101 and with the high-end interface 103. A single activation command 200 may be received by the activation module 102 or multiple consecutive activation commands 200 may be received by the activation module 102. For example, upon receipt of an activation command 200, the activation module 102 may activate the high-end interface 103 and de-activate the low-end module 101, after which the high-speed communication may start. In another example, first the activation module 102 may interpret a received command 200 and activate the transmission of a pilot signal 201. A pilot signal 201 is not necessarily the high-speed communication signal 300, but it may be sent using the same technology as is used to transceive the high-speed communication signal 103. The pilot signal 201 allows for localisation of the internally installed transceiver device 100 without entering the customer premises 401. In a next step, an additional activation command 200 may be sent, that is interpreted by the activation module 102 and is used to activate the high-end interface 103 and to de-activate the low-end module 101.

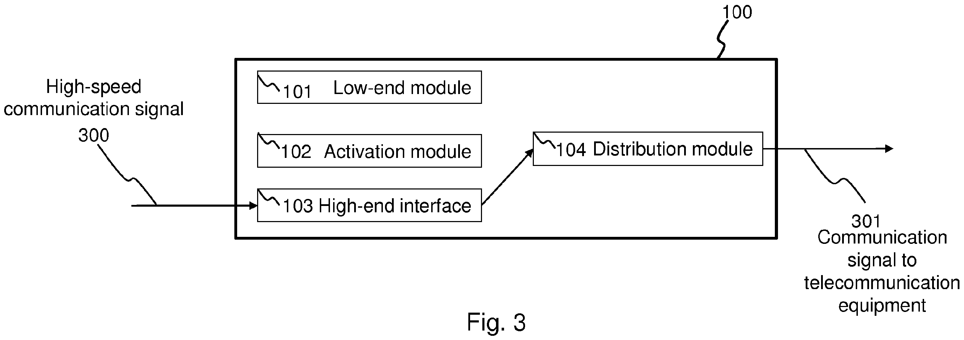

Fig. 3 shows an example embodiment of a transceiver device 100, while being used with activated high-end interface 103. A high-speed communication signal 300 is received by the transceiver device 100, using the high-end interface 103. The latter interfaces with a wireless connection 601 established throughout the perimeter 402. For example, the high-end interface comprises a transceiver enabling a wireless connection 601 through the perimeter 402 using inductive power coupling, RF technology, mmWave, etc. In another example embodiment, the wireless connection 601 through the perimeter 402 uses inductive power coupling for the power transfer, and a sub-6 GHz technology, e.g. LTE/4G, 3.5 GHz Wi-Fi, ... for the data part of the high-speed communication signal 300. In this example, the transmitter for the data part may also be used by the low-end module 101, such that a more simple and cheaper design is obtained.

The high-speed communication signal 300 is supported by a second level subscription. A second level subscription is for example an advanced, premium or high-end subscription, for which a higher fee is due than for a low-end subscription. For example, the high-speed communication signal 300 has a transmission speed which is a least a factor 10 higher than the transmission speed of a standard-speed communication signal 105. For example, the transmission speed of the high-speed communication signal 300 is in the order of Gb/s. Other levels of transmission speed are possible however, e.g. in correspondence with future developments in telecommunications technology. In the example embodiment of Fig. 3 the transceiver device 100 comprises a distribution module 104. The received high-speed communication signal 300 is transmitted to the distribution module 104 and further distributed to telecommunication equipment 403 as a communication signal 301.

The transceiver device 100, as shown in Fig. 1, Fig. 2 and Fig. 3, is configured to be installed at the inside of customer premises 401. It may be installed by the end-user himself. Fig. 1, Fig. 2 and Fig. 3 illustrate that the transceiver device 100 comprises all the hardware that needs to be installed inside the premises, for the low-end configuration as well as for the high-end configuration. Consequently, it allows for a flexible and seamless upgrade from a low-end subscription to a high-end subscription, without the need to replace the internally installed transceiver device 100 and without needing an intrusive installation process.

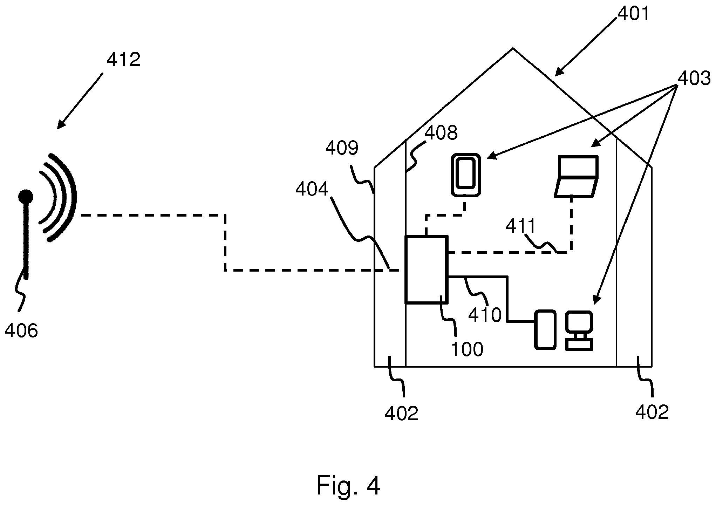

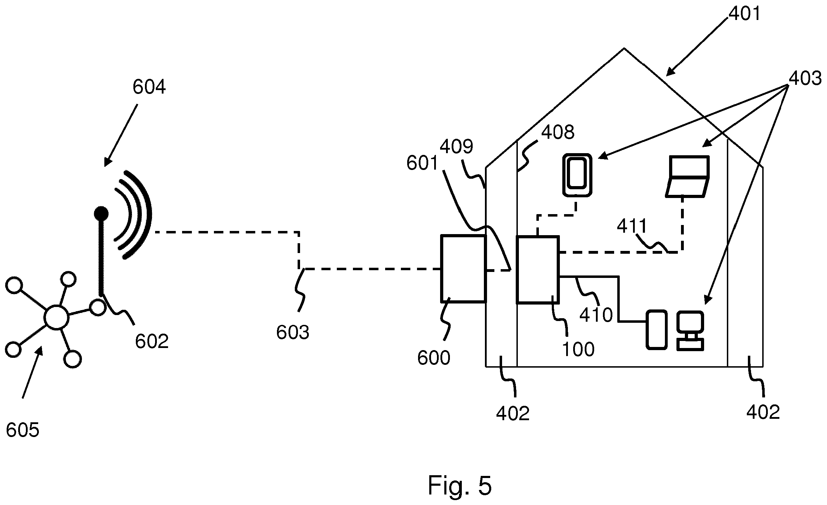

Fig. 4 and Fig. 5 illustrate the use of an example embodiment of a transceiver device 100 for connecting telecommunication equipment 403 inside customer premises 401 to a telecommunications network 412, 604. A telecommunication network 412, 604 is typically provided by a telecom operator or telecommunication service provider, and offered telecommunication services may include data, video, voice, etc. The telecommunications networks 412 and 604 provide Fixed Wireless Access, i.e. no cabling is used to bring telecommunication services to the premises. Customer premises 401 are, for example, a house, apartment building, office building, commercial building, etc. Inside the customer premises 401, telecommunication equipment 403 is available, for example devices such as telephones, smartphones, tablets, laptop computers, desktop computers, televisions, etc. The customer premises 401 are bordered by a perimeter 402 which forms a physical demarcation without apertures. For example, the perimeter 402 is a wall separating the inside from the outside of the premises 401, a window, a roof, etc. The perimeter 402 has an inner edge 408, and an outer edge 409. The transceiver device 100 is mounted on the inner edge 408 of the perimeter 402. The transceiver device 100 connects with telecommunication equipment 403, via one or more wireless connections 411, one or more wired connections 410, or both wireless and wired connections. A wide variety of wireless connections may be used, Wi-Fi or any other wireless technology based on an (actual or future) IEEE-standard, radio frequency transmissions, etc. For the wired connection 410 any type of suitable communication wire may be used, e.g. an Ethernet cable, coax cable, twisted pair cable, etc.

Fig. 4 illustrates an example of the use of an example embodiment of a transceiver device 100, where a low-end subscription applies. Typically, when a customer buys the transceiver device 100 and starts using it, such a low-end configuration will first be used, thereby paying for a low-end subscription. The transceiver device 100 may be commercialised e.g. as a Base Box or similar concept, referring to the standard-speed performance it brings. The transceiver device 100 is to be installed at the inner edge 408 of the perimeter 402. The transceiver device 100 may not be installed at other internal positions, like e.g. being placed on a cupboard next to the TV. In an example embodiment, the position of the transceiver device 100 may be chosen taking into account good performance of a future high-end configuration, thereby taking into account e.g. external line-of-sight conditions.

In Fig. 4 the telecommunications network 412 is a wireless network, with base stations 406. For example, antenna sites for point-to-multipoint connections are provided, and premises in e.g. rural areas connect to this network by means of Fixed Wireless Access. For example, the base stations 406 are 4G/LTE bases stations, and the fixed wireless access allows for transmission speeds in the order of 10 - 100 Mb/s. Other technologies, e.g. WiMax, 5G or any existing or future wireless transmission technologies may be used as well. In the example embodiment of Fig. 4, the transceiver device 100 wirelessly connects with the 4G/LTE network. The sub-6 GHz technology used by 4G/LTE signals allows to wirelessly bridge the perimeter 402. In the example embodiment of Fig. 4 the transceiver device 100 contains all the functionalities, including antenna and modem functionalities, to connect to the 4G/LTE network. No additional outside hardware is needed here. In another example embodiment, not shown in the figure, an outdoor antenna, installed at the outer edge 409 of the perimeter 402, may be used to get access to the 4G/LTE network 412. In the latter example, a wired connection throughout the perimeter, e.g. using Power over Ethernet, may be used to connect the outdoor antenna with the transceiver device 100, whereby the low-end module provides the interfacing with the wired connection trough the perimeter. In the example of Fig. 4 the wireless connection 404 allows to connect the transceiver device 100 to the standard-speed 4G/LTE network 412, thereby transceiving a standard-speed communication signal 105.

Fig. 5 illustrates an example of the use of an example embodiment of a transceiver device 100, where a high-end subscription applies. A high-speed communication signal 300 is exchanged between the transceiver device 100 and an outside transceiver device 600. An outside transceiver device 600 is installed at the outer edge 409 of the perimeter 402. Typically, an outside transceiver device 600 is installed by a service technician, after the customer has requested to upgrade from a low-end to a high-end subscription. The outside transceiver device 600 may be commercialised as a Booster Box or a similar concept, referring to the additional hardware that needs to be installed in order to obtain a performance boost.

Transceiving the high-speed communication signal 300 between the transceiver device 100 and the outside transceiver device 600 is done via a wireless connection 601 throughout the perimeter 402. The wireless connection 601 throughout the perimeter uses 402 any wireless protocol, like e.g. any (future) Wi-Fi standard or sub-6GHz technology. In another example, the wireless connection 601 throughout the perimeter uses inductive power coupling, e.g. providing a data communication link of up to 2,5 Gb/s through the perimeter 402 at minimal power loss. In another example, a combination of inductive power coupling and sub-6 GHz technology is used, where the former is use for the data transfer, and the latter is used for the power transfer.

In the example of Fig. 5, the outside transceiver device 600 wirelessly connects with the endpoint of a high-speed wired network 605. For this purpose, a wireless network 604 comprising base stations 602 is provided in order to wirelessly bridge the last mile to the premises 401. For example, the high-speed wired network 605 is an optical fibre network, with transmission speeds in the order of Gb/s. Other levels of transmission speeds, e.g. in function of (future) developments are possible, however.

The wireless connection 603 between the outside transceiver device 600 and the high-speed network endpoint 602 typically has a transmission speed in the same order of magnitude as the transmission speeds delivered by the high-speed wired network 605. In an example embodiment, a high-spectrum technology may be used. For example, mmWave technology may be used, also known as the WiGig fixed wireless connection standard, also known as 802.11ad. MmWave technology uses the relatively unused 60 GHz spectrum, enabling to use wider channels than standard Wi-Fi, resulting in significantly faster data rates of order Gb/s.

In the illustration of Fig. 5, the outside transceiver device is positioned in line with the transceiver device 100, such that the distance to bridge by the wireless connection 601 is minimal. Such a position may be beneficial to obtain optimal connectivity between the outside transceiver device 600 and the transceiver device 100. However, other positions of both the transceiver device 100 and the outside transceiver device 600 may be chosen. For example, the choice of the position of the outside transceiver 600 device may be driven by line-of-sight conditions with the base station 602, thereby obtaining optimal connectivity between the outside transceiver device 600 and the high-speed network 605. In another example, the position of the outside transceiver 600 device may be based on a balance between both line-of-sight conditions towards the high-speed network 605 and connectivity with the transceiver device 100.

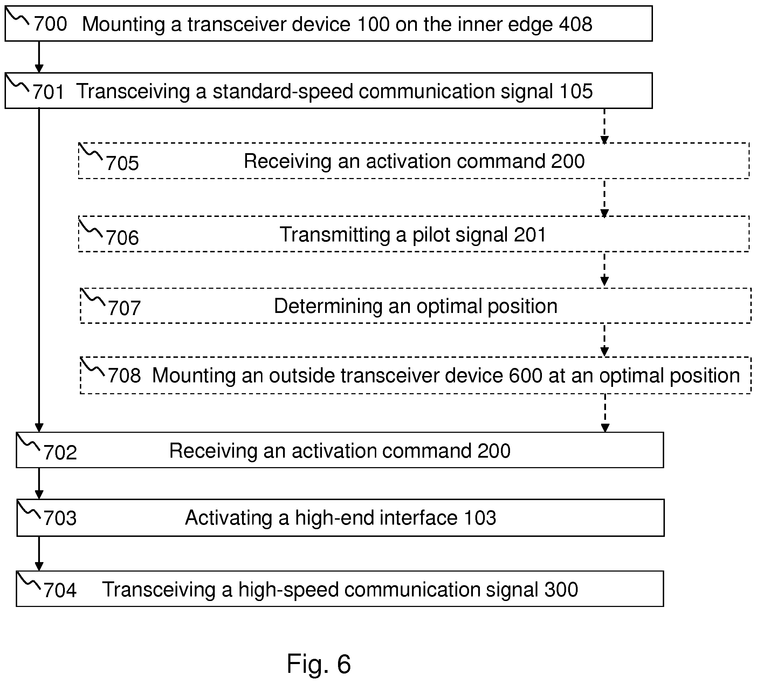

Fig. 6 illustrates an example embodiment of a method for connecting telecommunication equipment 403 inside customer premises 401 to a telecommunications network 412, 604. In the example embodiment of Fig. 6 the method comprises a first step 700, wherein a transceiver device is mounted on the inner edge 408 of a perimeter 402. Optionally, the placement of the transceiver device 100 takes into account the optimal location of a future outside transceiver device 600. The latter information may be provided to the end-user, who typically installs the transceiver device 100, by the telecom operator, e.g. in a web or smartphone application.

In step 701 of Fig. 6, a standard-speed communication signal 105 is transceived. This implies that a low-subscription applies, like was illustrated in the example embodiment of Fig. 4. The standard-speed communication signal 105 is transceived throughout a perimeter 402 by a low-end module 101 in the transceiver device 100 mounted on the inner edge 408 of the perimeter 402.

When an end-user, currently using the low-end solution, wants to upgrade to the high-end solution, he passes his request to the telecom operator, e.g. by clicking a box on the operator's website. After receipt of this request, a service technician dispatched by a telecom operator will come on-site. On-site, the technician remotely sends an activation command 200, e.g. by using a control unit or remote control. As illustrated in step 705 of Fig. 7, the activation command 200 is received by the activation module 102 in the transceiver device 100. Optionally, as presented in step 706 of Fig. 7, the transceiver device 100 transmits a pilot signal 201 upon receipt of an activation command 200. Possibly an approximate location of the transceiver device 100 is known to the technician. The technician may refine the estimated location of the transceiver device 100 by e.g. scanning with a receiver to measure the power level of the pilot signal 201 transmitted by the transceiver device 100 throughout the perimeter 402. This may help the technician in determining the optimal location for installing an outside transceiver device 600 where a short-range high-throughput wireless connection must be established with, as illustrated in step 707 of Fig. 6. In another example embodiment of the method, the optimal position of the outside transceiver device 600 is based on line-of-sight conditions towards an external high-speed network 604, or on a balance between connectivity with both the transceiver device 100 and the high-speed network 604. Line-of-sight conditions may be analysed by means of a 3D scenario capture, based on geographical information provided by a telecom operator or any other party.

After having determined the optimal position for the outside transceiver device 600, the outside transceiver device 600 is mounted on the outer edge 409 at this position, as is presented in step 708 of Fig. 6. Next, as presented in step 702 and 703, the high-end interface 103 is activated, upon receipt of an activation command 200. Finally, in step 704 a high-speed communication signal 300 is transceived by the high-end interface 103, using a wireless connection 601 established throughout the perimeter 402. Doing so, the configuration for the end-user remains unaltered, while he/she sees an immediate boost in performance.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions.

## Claims

1. A transceiver device (100) for providing Fixed Wireless Access Services to customer premises (401), where said premises (401) are bordered by a perimeter (402), said transceiver device (100) being configured to be mounted on the inner edge (408) of said perimeter (402), and said transceiver device (100) comprising:
- a low-end module (101) configured to receive and transmit a standard-speed communication signal (105) via a wireless connection with a base station (406) of a first telecommunication network (412) outside said perimeter (402), said standard-speed communication signal (105) being supported by a first level subscription;
the transceiver device **characterized by**:
- a high-end interface (103) configured to receive and transmit a high-speed communication signal (300) via a wireless connection (601) established throughout said perimeter (402), said high-end interface (103) being configured to establish said wireless connection (601) with an outside transceiver device (600), when said outside transceiver device (600) is mounted on the outer edge (409) of said perimeter (402) and said outside transceiver device (600) wirelessly connects with a base station (602) of a second telecommunication network (604),
wherein said high-speed communication signal (300) is supported by a second level subscription, said high-speed communication signal (300) having a transmission speed higher than the transmission speed of said standard-speed communication signal (105);
- an activation module (102) configured to receive an activation command (200) and to activate said high-end interface (103) upon receipt of said activation command (200).

2. A transceiver device (100) according to claim 1,
wherein said activation module (102) is configured to receive said activation command (200) from outside said perimeter (402).

3. A transceiver device (100) according to claim 1,
wherein said high-end interface (103) is configured to establish said wireless connection (601) with an outside transceiver device (600), when said outside transceiver device (600) is mounted on the outer edge (409) of said perimeter (402) and said outside transceiver device (600) wirelessly connects with the endpoint of a high-speed wired network (605).

4. A transceiver device (100) according to claim 1,
wherein said transceiver device (100) is configured to wirelessly transmit a pilot signal (201) throughout said perimeter (402).

5. A transceiver device (100) according to claim 1,
wherein said low-end module (101) is configured to connect to a wireless communication network (412), where said connection (404) throughout said perimeter (402) is established wirelessly using a low-spectrum technology.

6. A transceiver device (100) according to claim 3,
wherein said high-speed wired network (605) is an optical fibre network.

7. A transceiver device (100) according to claim 3,
wherein said high-end interface (103) is configured to establish said wireless connection (601) with an outside transceiver device (600), said outside transceiver device (600) being configured to wirelessly connect with said high-speed wired network (605) via a high-spectrum technology.

8. A transceiver device (100) according to claim 1,
wherein said high-end interface (103) is configured to establish said wireless connection (601) throughout said perimeter (402) using at least one of inductive power coupling, RF technology, and low-spectrum technology.

9. A transceiver device (100) according to claim 8,
wherein said high-end interface (103) is configured to establish said wireless connection (601) throughout said perimeter (402) using low-spectrum technology for exchanging the data part of said high-speed communication signal (300).

10. A transceiver device (100) according to claim 1,
wherein said high-speed communication signal (300) has a transmission speed which is at least 10 times higher than the transmission speed of the standard-speed communication signal (105).

11. A transceiver device (100) according to claim 1,
wherein said transceiver device (100) further comprises a distribution module (104) configured to transceive communication signals between said telecommunication equipment (403) and said transceiver device (100).

12. A method for providing Fixed Wireless Access Services to customer premises (401), where said premises (401) are bordered by a perimeter (402), said method comprising:
- mounting a transceiver device (100) on the inner edge (408) of said perimeter (402);
- transceiving a standard-speed communication signal (105) throughout said perimeter (402) by a low-end module (101) in said transceiver device (100), via a wireless connection with a base station (406) of a first telecommunication network (412) outside said perimeter (402), said standard-speed communication signal (105) being supported by a first level subscription;
- mounting an outside transceiver device (600) on the outer edge (409) of said perimeter (402); the method **characterized by**:
- receiving an activation command (200) from outside said perimeter (402) by an activation module (102) in said transceiver device (100);
- activating a high-end interface (103) in said transceiver device (100) upon receipt of said activation command (200);
- transceiving by said high-end interface (103), a high-speed communication signal (300) between said transceiver device (100) and said outside transceiver device (600), using a wireless connection (601) established throughout said perimeter (402), said wireless connection (601) being established with said outside transceiver device (600) and said outside transceiver device (600) wirelessly connecting with a base station (602) of a second telecommunication network (604),
wherein said high-speed communication signal (300) is supported by a second level subscription, said high-speed communication signal (300) having a transmission speed higher than the transmission speed of said standard-speed communication signal (105).

13. A method according to claim 12, wherein said method further comprises:
- transmitting a pilot signal (201) by said transceiver device (100);
- determining an optimal position by a technician based on both the signal strength of said pilot signal (201) measured at the outer edge (409) of said perimeter (402) and the connectivity with a high-speed wired network endpoint (602);
- mounting said outside transceiver device (600) on said outer edge (409) of said perimeter (402) at said optimal position.

14. A computer program product comprising computer-executable instructions for causing a device to perform at least the following:
- transceiving a standard-speed communication signal (105) throughout a perimeter (402) by a low-end module (101) in a transceiver device (100) mounted on the inner edge (408) of said perimeter (402), via a wireless connection with a base station (406) of a first telecommunication network (412) outside said perimeter (402), said standard-speed communication signal (105) being supported by a first level subscription;
**characterized by**:
- receiving an activation command (200) by an activation module (102) in said transceiver device (100);
- activating a high-end interface (103) in said transceiver device (100) upon receipt of said activation command (200);
- transceiving by said high-end interface (103), a high-speed communication signal (300) between said transceiver device (100) and an outside transceiver device (600) mounted on the outer edge (409) of said perimeter (402), using a wireless connection (601) established throughout said perimeter (402), said wireless connection (601) being established with said outside transceiver device (600) and said outside transceiver device (600) wirelessly connecting with a base station (602) of a second telecommunication network (604),
wherein said high-speed communication signal (300) is supported by a second level subscription, said high-speed communication signal (300) having a transmission speed higher than the transmission speed of said standard-speed communication signal (105).

## Patentansprüche

1. Sendeempfängervorrichtung (100) zum Bereitstellen von festen drahtlosen Zugangsdiensten für einen Kundenstandort (401), wo der Standort (401) durch einen Umfang (402) begrenzt ist, wobei die Sendeempfängervorrichtung (100) dazu ausgelegt ist, am Innenrand (408) des Umfangs (402) montiert zu werden, und wobei die Sendeempfängervorrichtung (100) Folgendes umfasst:
- ein Low-End-Modul (101), das dazu ausgelegt ist, via eine drahtlose Verbindung mit einer Basisstation (406) eines ersten Telekommunikationsnetzwerks (412) außerhalb des Umfangs (402) ein Kommunikationssignal (105) mit Standardgeschwindigkeit zu empfangen und zu übertragen, wobei das Kommunikationssignal (105) mit Standardgeschwindigkeit von einer Subskription erster Ebene unterstützt wird;
wobei die Sendeempfängervorrichtung durch Folgendes gekennzeichnet ist:
- eine High-End-Schnittstelle (103), die dazu ausgelegt ist, via eine drahtlose Verbindung (601), die im gesamten Umfang (402) aufgebaut ist, ein Hochgeschwindigkeitskommunikationssignal (300) zu empfangen und zu übertragen, wobei die High-End-Schnittstelle (103) dazu ausgelegt ist, die drahtlose Verbindung (601) mit einer außerhalb befindlichen Sendeempfängervorrichtung (600) aufzubauen, wenn die außerhalb befindliche Sendeempfängervorrichtung (600) am Außenrand (409) des Umfangs (402) montiert ist und sich die außerhalb befindliche Sendeempfängervorrichtung (600) drahtlos mit einer Basisstation (602) eines zweiten Telekommunikationsnetzwerks (604) verbindet,
wobei das Hochgeschwindigkeitskommunikationssignal (300) von einer Subskription zweiter Ebene unterstützt wird, wobei das Hochgeschwindigkeitskommunikationssignal (300) eine Übertragungsgeschwindigkeit aufweist, die höher ist als die Übertragungsgeschwindigkeit des Kommunikationssignals (105) mit Standardgeschwindigkeit;
- ein Aktivierungsmodul (102), das dazu ausgelegt ist, einen Aktivierungsbefehl (200) zu empfangen und nach Empfang des Aktivierungsbefehls (200) die High-End-Schnittstelle (103) zu aktivieren.

2. Sendeempfängervorrichtung (100) nach Anspruch 1, wobei das Aktivierungsmodul (102) dazu ausgelegt ist, den Aktivierungsbefehl (200) von außerhalb des Umfangs (402) zu empfangen.

3. Sendeempfängervorrichtung (100) nach Anspruch 1, wobei die High-End-Schnittstelle (103) dazu ausgelegt ist, die drahtlose Verbindung (601) mit einer außerhalb befindlichen Sendeempfängervorrichtung (600) aufzubauen, wenn die außerhalb befindliche Sendeempfängervorrichtung (600) am Außenrand (409) des Umfangs (402) montiert ist und sich die außerhalb befindliche Sendeempfängervorrichtung (600) drahtlos mit dem Endpunkt eines kabelgebundenen Hochgeschwindigkeitsnetzwerks (605) verbindet.

4. Sendeempfängervorrichtung (100) nach Anspruch 1, wobei die Sendeempfängervorrichtung (100) dazu ausgelegt ist, ein Pilotsignal (201) drahtlos im gesamten Umfang (402) zu übertragen.

5. Sendeempfängervorrichtung (100) nach Anspruch 1, wobei das Low-End-Modul (101) dazu ausgelegt ist, sich mit einem drahtlosen Kommunikationsnetzwerk (412) zu verbinden, wo die Verbindung (404) im gesamten Umfang (402) unter Verwendung einer Niederspektrumtechnologie drahtlos aufgebaut wird.

6. Sendeempfängervorrichtung (100) nach Anspruch 3, wobei das kabelgebundene Hochgeschwindigkeitsnetzwerk (605) ein Lichtleiternetzwerk ist.

7. Sendeempfängervorrichtung (100) nach Anspruch 3, wobei die High-End-Schnittstelle (103) dazu ausgelegt ist, die drahtlose Verbindung (601) mit einer außerhalb befindlichen Sendeempfängervorrichtung (600) aufzubauen, wobei die außerhalb befindliche Sendeempfängervorrichtung (600) dazu ausgelegt ist, sich via eine Hochspektrumtechnologie mit dem kabelgebundenen Hochgeschwindigkeitsnetzwerk (605) zu verbinden.

8. Sendeempfängervorrichtung (100) nach Anspruch 1, wobei die High-End-Schnittstelle (103) dazu ausgelegt ist, die drahtlose Verbindung (601) unter Verwendung von mindestens einem einer induktiven RF-Energiekopplungstechnologie und einer Niederspektrumtechnologie im gesamten Umfang (402) aufzubauen.

9. Sendeempfängervorrichtung (100) nach Anspruch 8, wobei die High-End-Schnittstelle (103) dazu ausgelegt ist, die drahtlose Verbindung (601) unter Verwendung einer Niederspektrumtechnologie zum Austauschen des Datenteils des Hochgeschwindigkeitskommunikationssignals (300) im gesamten Umfang (402) aufzubauen.

10. Sendeempfängervorrichtung (100) nach Anspruch 1, wobei das Hochgeschwindigkeitskommunikationssignal (300) eine Übertragungsgeschwindigkeit aufweist, die mindestens 10 Mal höher ist als die Übertragungsgeschwindigkeit des Kommunikationssignals (105) mit Standardgeschwindigkeit.

11. Sendeempfängervorrichtung (100) nach Anspruch 1,
wobei die Sendeempfängervorrichtung (100) ferner ein Verteilungsmodul (104) umfasst, das dazu ausgelegt ist, Kommunikationssignale zwischen der Telekommunikationsausrüstung (403) und der Sendeempfängervorrichtung (100) zu senden und zu empfangen.

12. Verfahren zum Bereitstellen von festen drahtlosen Zugangsdiensten für einen Kundenstandort (401), wo der Standort (401) durch einen Umfang (402) begrenzt ist, wobei das Verfahren Folgendes umfasst:
- Montieren einer Sendeempfängervorrichtung (100) am Innenrand (408) des Umfangs (402);
- Senden und Empfangen eines Kommunikationssignals (105) mit Standardgeschwindigkeit durch ein Low-End-Modul (101) in der Sendeempfängervorrichtung (100) im gesamten Umfang (402) via eine drahtlose Verbindung mit einer Basisstation (406) eines ersten Telekommunikationsnetzwerks (412) außerhalb des Umfangs (402), wobei das Kommunikationssignal (105) mit Standardgeschwindigkeit von einer Subskription erster Ebene unterstützt wird;
- Montieren einer außerhalb befindlichen Sendeempfängervorrichtung (600) am Außenrand (409) des Umfangs (402) ;
wobei das Verfahren durch Folgendes gekennzeichnet ist:
- Empfangen eines Aktivierungsbefehls (200) von außerhalb des Umfangs (402) durch ein Aktivierungsmodul (102) in der Sendeempfängervorrichtung (100);
- Aktivieren einer High-End-Schnittstelle (103) in der Sendeempfängervorrichtung (100) nach Empfang des Aktivierungsbefehls (200);
- Senden und Empfangen eines Hochgeschwindigkeitskommunikationssignals (300) durch die High-End-Schnittstelle (103) zwischen der Sendeempfängervorrichtung (100) und der außerhalb befindlichen Sendeempfängervorrichtung (600) unter Verwendung einer drahtlosen Verbindung (601), die im gesamten Umfang (402) aufgebaut ist, wobei die drahtlose Verbindung (601) mit der außerhalb befindlichen Sendeempfängervorrichtung (600) aufgebaut ist und die außerhalb befindliche Sendeempfängervorrichtung (600) sich drahtlos mit einer Basisstation (602) eines zweiten Telekommunikationsnetzwerks (604) verbindet,
wobei das Hochgeschwindigkeitskommunikationssignal (300) von einer Subskription zweiter Ebene unterstützt wird, wobei das Hochgeschwindigkeitskommunikationssignal (300) eine Übertragungsgeschwindigkeit aufweist, die höher ist als die Übertragungsgeschwindigkeit des Kommunikationssignals (105) mit Standardgeschwindigkeit.

13. Verfahren nach Anspruch 12, wobei das Verfahren ferner Folgendes umfasst:
- Übertragen eines Pilotsignals (201) durch die Sendeempfängervorrichtung (100);
- Bestimmen einer optimalen Position durch einen Techniker sowohl auf Basis der Signalstärke des Pilotsignals (201), die am Außenrand (409) des Umfangs (402) gemessen wird, als auch der Konnektivität mit einem kabelgebundenen Hochgeschwindigkeitsnetzwerkendpunkt (602);
- Montieren der außerhalb befindlichen Sendeempfängervorrichtung (600) am Außenrand (409) des Umfangs (402) in der optimalen Position.

14. Computerprogrammprodukt, das computerausführbare Anweisungen zum Bewirken, dass eine Vorrichtung mindestens Folgendes durchführt, umfasst:
- Senden und Empfangen eines Kommunikationssignals (105) mit Standardgeschwindigkeit durch ein Low-End-Modul (101) in einer Sendeempfängervorrichtung (100), die am Innenrand (408) des Umfangs (402) montiert ist, im gesamten Umfang (402) via eine drahtlose Verbindung mit einer Basisstation (406) eines ersten Telekommunikationsnetzwerks (412) außerhalb des Umfangs (402), wobei das Kommunikationssignal (105) mit Standardgeschwindigkeit von einer Subskription erster Ebene unterstützt wird;
**gekennzeichnet durch**:
- Empfangen eines Aktivierungsbefehls (200) durch ein Aktivierungsmodul (102) in der Sendeempfängervorrichtung (100);
- Aktivieren einer High-End-Schnittstelle (103) in der Sendeempfängervorrichtung (100) nach Empfang des Aktivierungsbefehls (200);
- Senden und Empfangen eines Hochgeschwindigkeitskommunikationssignals (300) durch die High-End-Schnittstelle (103) zwischen der Sendeempfängervorrichtung (100) und der außerhalb befindlichen Sendeempfängervorrichtung (600), die am Außenrand (409) des Umfangs (402) montiert ist, unter Verwendung einer drahtlosen Verbindung (601), die im gesamten Umfang (402) aufgebaut ist, wobei die drahtlose Verbindung (601) mit der außerhalb befindlichen Sendeempfängervorrichtung (600) aufgebaut ist und die außerhalb befindliche Sendeempfängervorrichtung (600) sich drahtlos mit einer Basisstation (602) eines zweiten Telekommunikationsnetzwerks (604) verbindet,
wobei das Hochgeschwindigkeitskommunikationssignal (300) von einer Subskription zweiter Ebene unterstützt wird, wobei das Hochgeschwindigkeitskommunikationssignal (300) eine Übertragungsgeschwindigkeit aufweist, die höher ist als die Übertragungsgeschwindigkeit des Kommunikationssignals (105) mit Standardgeschwindigkeit.

## Revendications

1. Dispositif émetteur-récepteur (100) pour fournir des services d'accès sans fil fixes à des locaux (401) d'abonné, où lesdits locaux (401) sont bordés par un périmètre (402), ledit dispositif émetteur-récepteur (100) étant configuré pour être monté sur le bord intérieur (408) dudit périmètre (402), et ledit dispositif émetteur-récepteur (100) comprenant :
- un module d'extrémité inférieure (101) configuré pour recevoir et transmettre un signal de communication à vitesse standard (105) via une connexion sans fil avec une station de base (406) d'un premier réseau de télécommunication (412) à l'extérieur dudit périmètre (402), ledit signal de communication à vitesse standard (105) étant pris en charge par un abonnement de premier niveau ;
le dispositif émetteur-récepteur étant **caractérisé par** :
- une interface d'extrémité supérieure (103) configurée pour recevoir et transmettre un signal de communication à haute vitesse (300) via une connexion sans fil (601) établie à travers ledit périmètre (402), ladite interface d'extrémité supérieure (103) étant configurée pour établir ladite connexion sans fil (601) avec un dispositif émetteur-récepteur extérieur (600), lorsque ledit dispositif émetteur-récepteur extérieur (600) est monté sur le bord extérieur (409) dudit périmètre (402), et ledit dispositif émetteur-récepteur extérieur (600) se connecte sans fil à une station de base (602) d'un deuxième réseau de télécommunication (604),
dans lequel ledit signal de communication à haute vitesse (300) est pris en charge par un abonnement de deuxième niveau, ledit signal de communication à haute vitesse (300) ayant une vitesse de transmission supérieure à la vitesse de transmission dudit signal de communication à vitesse standard (105) ;
- un module d'activation (102) configuré pour recevoir un ordre d'activation (200) et pour activer ladite interface d'extrémité supérieure (103) à la réception dudit ordre d'activation (200).

2. Dispositif émetteur-récepteur (100) selon la revendication 1,
dans lequel ledit module d'activation (102) est configuré pour recevoir ledit ordre d'activation (200) depuis l'extérieur dudit périmètre (402).

3. Dispositif émetteur-récepteur (100) selon la revendication 1,
dans lequel ladite interface d'extrémité supérieure (103) est configurée pour établir ladite connexion sans fil (601) avec un dispositif émetteur-récepteur extérieur (600), lorsque ledit dispositif émetteur-récepteur extérieur (600) est monté sur le bord extérieur (409) dudit périmètre (402), et ledit dispositif émetteur-récepteur extérieur (600) se connecte sans fil au point d'extrémité d'un réseau câblé à haute vitesse (605).

4. Dispositif émetteur-récepteur (100) selon la revendication 1,
dans lequel ledit dispositif émetteur-récepteur (100) est configuré pour transmettre sans fil un signal pilote (201) à travers ledit périmètre (402).

5. Dispositif émetteur-récepteur (100) selon la revendication 1,
dans lequel ledit module d'extrémité inférieure (101) est configuré pour se connecter à un réseau de communication sans fil (412), où ladite connexion (404) à travers ledit périmètre (402) est établie sans fil en utilisant une technologie à faible spectre.

6. Dispositif émetteur-récepteur (100) selon la revendication 3,
dans lequel ledit réseau câblé à haute vitesse (605) est un réseau à fibres optiques.

7. Dispositif émetteur-récepteur (100) selon la revendication 3,
dans lequel ladite interface d'extrémité supérieure (103) est configurée pour établir ladite connexion sans fil (601) avec un dispositif émetteur-récepteur extérieur (600), ledit dispositif émetteur-récepteur extérieur (600) étant configuré pour se connecter sans fil avec ledit réseau câblé à haute vitesse (605) via une technologie à spectre élevé.

8. Dispositif émetteur-récepteur (100) selon la revendication 1,
dans lequel ladite interface d'extrémité supérieure (103) est configurée pour établir ladite connexion sans fil (601) à travers ledit périmètre (402) en utilisant au moins une parmi une technologie RF de couplage de puissance inductif, et une technologie à faible spectre.

9. Dispositif émetteur-récepteur (100) selon la revendication 8,
dans lequel ladite interface d'extrémité supérieure (103) est configurée pour établir ladite connexion sans fil (601) à travers ledit périmètre (402) en utilisant une technologie à faible spectre pour échanger la partie de données dudit signal de communication à haute vitesse (300).

10. Dispositif émetteur-récepteur (100) selon la revendication 1
dans lequel ledit signal de communication à haute vitesse (300) a une vitesse de transmission qui est au moins 10 fois supérieure à la vitesse de transmission du signal de communication à vitesse standard (105).

11. Dispositif émetteur-récepteur (100) selon la revendication 1,
dans lequel ledit dispositif émetteur-récepteur (100) comprend en outre un module de distribution (104) configuré pour émettre-recevoir des signaux de communication entre ledit équipement de télécommunication (403) et ledit dispositif émetteur-récepteur (100).

12. Procédé pour fournir des services d'accès sans fil fixes à des locaux (401) d'abonné, où lesdits locaux (401) sont bordés par un périmètre (402), ledit procédé comprenant :
- le montage d'un dispositif émetteur-récepteur (100) sur le bord intérieur (408) dudit périmètre (402) ;
- l'émission-réception d'un signal de communication à vitesse standard (105) à travers ledit périmètre (402) par un module d'extrémité inférieure (101) dans ledit dispositif émetteur-récepteur (100), via une connexion sans fil avec une station de base (406) d'un premier réseau de télécommunication (412) à l'extérieur dudit périmètre (402), ledit signal de communication à vitesse standard (105) étant pris en charge par un abonnement de premier niveau ;
- le montage d'un dispositif émetteur-récepteur extérieur (600) sur le bord extérieur (409) dudit périmètre (402) ; le procédé étant **caractérisé par** :
- la réception d'un ordre d'activation (200) depuis l'extérieur dudit périmètre (402) par un module d'activation (102) dans ledit dispositif émetteur-récepteur (100) ;
- l'activation d'une interface d'extrémité supérieure (103) dans ledit dispositif émetteur-récepteur (100) à la réception dudit ordre d'activation (200) ;
- l'émission-réception par ladite interface d'extrémité supérieure (103), d'un signal de communication à haute vitesse (300) entre ledit dispositif émetteur-récepteur (100) et ledit dispositif émetteur-récepteur extérieur (600), en utilisant une connexion sans fil (601) établie à travers ledit périmètre (402), ladite connexion sans fil (601) étant établie avec la connexion sans fil dudit dispositif émetteur-récepteur extérieur (600) et dudit dispositif émetteur-récepteur extérieur (600) avec une station de base (602) d'un deuxième réseau de télécommunication (604),
dans lequel ledit signal de communication à haute vitesse (300) est pris en charge par un abonnement de deuxième niveau, ledit signal de communication à haute vitesse (300) ayant une vitesse de transmission supérieure à la vitesse de transmission dudit signal de communication à vitesse standard (105).

13. Procédé selon la revendication 12, dans lequel ledit procédé comprend en outre :
- la transmission d'un signal pilote (201) par ledit dispositif émetteur-récepteur (100) ;
- la détermination d'une position optimale par un technicien sur la base à la fois de la force du signal dudit signal pilote (201) mesurée au niveau du bord extérieur (409) dudit périmètre (402) et de la connectivité avec un point d'extrémité de réseau câblé à haute vitesse (602) ;
- le montage dudit dispositif émetteur-récepteur extérieur (600) sur ledit bord extérieur (409) dudit périmètre (402) à ladite position optimale.

14. Produit de programme informatique comprenant des instructions exécutables par ordinateur pour amener un dispositif à réaliser au moins ce qui suit :
- l'émission-réception d'un signal de communication à vitesse standard (105) à travers un périmètre (402) par un module d'extrémité inférieure (101) dans un dispositif émetteur-récepteur (100) monté sur le bord intérieur (408) dudit périmètre (402), via une connexion sans fil avec une station de base (406) d'un premier réseau de télécommunication (412) à l'extérieur dudit périmètre (402), ledit signal de communication à vitesse standard (105) étant pris en charge par un abonnement de premier niveau ; **caractérisé par** :
- la réception d'un ordre d'activation (200) par un module d'activation (102) dans ledit dispositif émetteur-récepteur (100) ;
- l'activation d'une interface d'extrémité supérieure (103) dans ledit dispositif émetteur-récepteur (100) à la réception dudit ordre d'activation (200) ;
- l'émission-réception par ladite interface d'extrémité supérieure (103), d'un signal de communication à haute vitesse (300) entre ledit dispositif émetteur-récepteur (100) et un dispositif émetteur-récepteur extérieur (600) monté sur le bord extérieur (409) dudit périmètre (402), en utilisant une connexion sans fil (601) établie à travers ledit périmètre (402), ladite connexion sans fil (601) étant établie avec la connexion sans fil dudit dispositif émetteur-récepteur extérieur (600) et dudit dispositif émetteur-récepteur extérieur (600) avec une station de base (602) d'un deuxième réseau de télécommunication (604),
dans lequel ledit signal de communication à haute vitesse (300) est pris en charge par un abonnement de deuxième niveau, ledit signal de communication à haute vitesse (300) ayant une vitesse de transmission supérieure à la vitesse de transmission dudit signal de communication à vitesse standard (105).
